# EUROPÄISCHE PATENTSCHRIFT

(11) **EP 3 321 024 B1**
(45) Veröffentlichungstag und Bekanntmachung des Hinweises auf die Patenterteilung: **26.06.2019**
(21) Anmeldenummer: 17201083.7
(22) Anmeldetag: 10.11.2017
(51) Int. Cl.: B23K 26/359, B23K 26/364, B23K 26/03, B23K 26/0622

(54) **VERFAHREN ZUR HERSTELLUNG EINER SCHWÄCHUNGSLINIE IN EIN FLÄCHENHAFTES WERKSTÜCK ENTLANG EINER VORGEGEBENEN KONTUR DURCH MATERIALABTRAG MITTELS LASER**
METHOD FOR FORMING A LINE OF WEAKNESS IN A PLANAR WORKPIECE ALONG A GIVEN CONTOUR BY REMOVING MATERIAL USING A LASER
PROCÉDÉ DE FABRICATION D'UNE LIGNE DE MOINDRE RÉSISTANCE DANS UNE PIÈCE À USINER PLANE LE LONG D'UN CONTOUR PRÉDÉTERMINÉ PAR ENLÈVEMENT DE MATIÈRE AU MOYEN D'UN LASER

(30) Priorität: 11.11.2016 DE 102016121644
(43) Veröffentlichungstag der Anmeldung: 16.05.2018
(73) Patentinhaber: JENOPTIK Automatisierungstechnik GmbH, 07745 Jena (DE)
(72) Erfinder: LUTZE, Walter, 07751 Jena (DE); SEIDEL, Frank, 07616 Bürgel (DE); GRIEBEL, Martin, 07743 Jena (DE); WEIßER, Jürgen, 07743 Jena (DE)
(74) Vertreter: Schaller, Renate

(56) Entgegenhaltungen:
- EP-A1- 0 827 802
- EP-A2- 2 962 800
- DE-A1- 10 144 628

## Beschreibung

Die Erfindung betrifft ein Verfahren zur Herstellung einer Schwächungslinie in ein flächenhaftes Werkstück entlang einer vorgegebenen Kontur, wobei die Kontur eine Aneinanderreihung von Abtragsorten beschreibt. Die Präambel des Anspruchs 1 basiert z.B. auf EP 2 962 800 A2.

Es ist heute auf vielen Anwendungsgebieten üblich, integrierte Schwächungslinien in flächenhaft ausgedehnte Werkstücke einzubringen, um diese im Bedarfsfall entlang dieser Schwächungslinie zu öffnen. Als Beispiele seien Aufreiß- und Trennhilfen in Verpackungsmitteln, medizinischen Hilfsmaterialien, Büromaterial oder Sicherheitsbekleidungen genannt. Besonders hohe Qualitätsanforderungen werden an Schwächungslinien in Airbagabdeckungen gestellt, die zum einen optisch nicht wahrnehmbar sein sollen und zum anderen im Fall der Aktivierung des Airbags gesichert dessen ungehinderten Durchtritt ermöglichen.

Aufgrund dieser Besonderheit ist der Stand der Technik bezüglich Verfahren zur Herstellung von Schwächungslinien fast ausschließlich anhand von Airbagabdeckungen beschrieben, weshalb auch die Beschreibung des hier offenbarten Verfahrens anhand einer Airbagabdeckung bzw. einer Komponente einer Airbagabdeckung erläutert wird.

Bei hochwertigen Ausführungen von Airbagabdeckungen wird eine stabile, formgebende Schicht oft mit weiteren Schichten, die Überzugmaterialien darstellen, versehen, durch welche die zum Fahrgastraum gerichtete Oberfläche des Abdeckelementes eine optische und haptische Aufwertung erfährt. Diese Überzugmaterialien sind in der Regel eine Zwischenschicht bildende Schaumstoffe oder Abstandsgewirke sowie als Dekorschicht dienende flexible und dünnwandige Materialien, wie Kunststofffolien, Kunstleder, textile Gewirke, Mikrofaservliese oder natürliches Leder. Für die sichere Entfaltung des Airbags werden in der Regel nicht nur in die formgebende Schicht sondern auch in die Überzugmaterialien Schwächungslinien eingebracht. Die Schwächungslinien können entlang einer Kontur in den fertigen Schichtaufbau oder in die einzelnen Schichten vor deren Montage eingebracht werden. Wenn nachfolgend von flächenhaften Werkstücken gesprochen wird, so kann das eine Einzelschicht oder aber auch ein Schichtaufbau sein.

Aus dem Stand der Technik sind eine Vielzahl von Verfahren bekannt, mit denen mittels Laser Schwächungslinien entweder in den fertigen Schichtaufbau einer Airbagabdeckung oder in einzelne Schichten (Komponenten) eingebracht werden, die dann nachträglich zu einem Schichtaufbau zusammengefügt werden.

In der DE 10 2013 104 138 B3 ist ein Verfahren zur Einbringung einer definierten Schwächungslinie in ein Überzugmaterial durch Materialabtrag beschrieben, bei dem das linienförmige Führen eines gepulsten Laserstrahls ein mehrfaches Wiederholen einer Abtastbewegung entlang der von Abtragsorten gebildeten Linie ist, wobei pro Abtragsort jeweils nur ein Laserpuls abgegeben wird. Die Parameter des Laserpulses sind dabei so gewählt, dass dieser einen Energieeintrag bewirkt, der am jeweiligen Abtragsort zu einer Erwärmung des Überzugmaterials auf eine Temperatur oberhalb einer Ablationsschwelle und damit zu einem Materialabtrag führt, jedoch die Temperatur in an den jeweiligen Abtragsort angrenzenden Bereichen des Überzugmaterials unterhalb einer Grenztemperatur, die zu Veränderungen in der Struktur des Überzugmaterials führen würde, gehalten wird.

Die mehrfache Wiederholung der Abtastbewegung kann bis zum Erreichen einer geringen Restwandstärke erfolgen, bei der eine Anordnung von Sensoren unterhalb der Schwächungslinie die dann transmittierende Laserstrahlung detektiert. Bei Erreichen der minimal zulässigen Restwandstärke an einem einzelnen Abtragsort erfolgt während der Abtastbewegung eine ortsaufgelöste Abschaltung des Laserstrahls. Das Erreichen der minimal zulässigen Restwandstärke wird durch die Detektion eines vorgegebenen Betrages transmittierender Laserleistung festgestellt.

Damit pro Abtragsort nur ein Laserpuls auftrifft, sind die Geschwindigkeit der Abtastbewegung und die Pulswiederholfrequenz des gepulsten Laserstrahls aufeinander abgestimmt.

Alternativ zu einem gepulsten Laserstrahl kann ein kontinuierlicher Laserstrahl verwendet werden, der während der wiederholten Abtastbewegung vorteilhaft entsprechend einem festen Regime an- und abgeschaltet wird, wobei die entlang der Linie eingebrachte Schwächungslinie die Form einer Schlitz-Steg-Linie mit einer abwechselnden Aneinanderreihung von Schlitzen und Stegen aufweist.

Indem pro Abtragsort das Erreichen einer minimalen Restwandstärke erfasst wird und eine entsprechende ortsaufgelöste Abschaltung erfolgt, kann eine Schwächungslinie hergestellt werden, die unabhängig von Materialdickenschwankungen eine über ihre Länge konstante Aufreißfestigkeit aufweist. Der Betrag des Aufreißwiderstandes kann hier, außer über die verbleibende Restwandstärke, über die Anzahl der Abtragsorte bzw. die Anzahl der entstehenden, das Material bis auf eine Restwand durchdringenden Perforationslöcher und deren Abstände bzw. Steglängen eingestellt werden.

Auch bei einem in der Patentschrift EP 0 991 551 B1 offenbarten Verfahren wird eine Schwächungslinie durch eine Aneinanderreihung einer Vielzahl nacheinander hergestellter Perforationslöcher mittels eines gepulsten Laserstrahls in eine Airbagabdeckung erzeugt. Die Perforationslöcher können einander überlappend oder durch verbleibende Stege voneinander beabstandet eingebracht werden. Die Perforationslöcher sind fertiggestellt, sobald eine Transmission der Laserstrahlung erfasst wird. Neben der Perforation können auch Schwächungslinien, Abschnitte in der Schwächungslinie oder einzelne Löcher hergestellt werden, ohne das Material vollständig zu perforieren. Die Tiefe dieser nicht perforierenden Schwächung kann anhand der Pulsanzahl und / oder der Pulsdauer, die zur Herstellung einer Perforation erforderlich ist bzw. sind, abgeschätzt und eingestellt werden. Genauere Angaben zur Einstellung der Tiefe werden in der Schrift nicht offenbart.

Ein aus der DE 10 2014 108 133 B4 bekanntes Verfahren unterscheidet sich hierzu dadurch, dass abwechselnd in erste Segmente der Schwächungslinie eine höhere Energie eingetragen wird als in zweite Segmente und die transmittierende Laserstrahlung durch die ersten Segmentrestwände hindurch Signale bewirkt, aus denen Rückschlüsse auf die Stärke der zweiten Segmentrestwände gezogen werden, ohne sie zu erfassen.

Die vorgenannten Verfahren haben gemeinsam, dass der Abtrag entlang der Kontur der herzustellenden Schwächungslinie mittels Laser erfolgt, wobei Material entfernt und damit die verbleibende Restwand unterhalb des jeweiligen Abtragsortes verringert wird. Abhängig vom Transmissionsgrad des Materials transmittiert Laserstrahlungsleistung durch die Restwand bei Unterscheitung einer bestimmten Dicke. Die transmittierende Laserstrahlungsleistung eines Laserpulses wird dann detektiert, wenn sie oberhalb eines unteren Grenzwertes des Empfindlichkeitsbereiches des Sensors liegt, sodass dieser ein Signal generiert. Für Materialien, die einen nur sehr geringen Transmissionsgrad aufweisen, wird das kurz vor dem vollständigen Durchbruch oder überhaupt erst bei Entstehung eines Mikroloches sein. Bei Materialien, die einen vergleichsweise hohen Transmissionsgrad haben, kann es sein, dass bereits ein Signal generiert wird, wenn die Restwandstärke noch zu hoch ist. Hier kann ein Schwellwert für das Signal durch vorherigen Test gefunden werden, der mit einer gewünschten Dicke der Restwand korreliert.

Es ist anzunehmen, dass bei den vorgenannten Verfahren das gewonnene Signal unmittelbar als Abschaltkriterium für den Laser dient.

Aus der EP 0 827 802 B1 ist ein Verfahren bekannt, bei dem die gewonnenen Signale eines Sensors aufintegriert werden und der so gebildete Integralwert als Abschaltkriterium mit einem mit der gewünschten Restwandstärke korrelierenden Sollwert verglichen wird. Hier wird allerdings die Schwächungslinie hergestellt, indem die eine Schwächungslinie bildenden Sacklöcher nacheinander fertig hergestellt werden. Die Integralwertbildung soll es ermöglichen, ein Abschaltkriterium zu schaffen, welches insbesondere der Ausbildung von Verbrennungsrückständen und Verdampfungsgasen bei der Ausbildung der Sacklöcher Rechnung trägt.

Aus der DE 10 2007 024 510 B3 geht ein Verfahren zur Herstellung einer Schwächungslinie durch Materialabtrag an einem flächenhaften Werkstück als bekannt hervor, bei dem ein Laserstrahl entlang einer vorgegebenen Kontur einer Schwächelinie geführt wird. Dabei wird ein Materialabtrag pro Abtragsort bis auf jeweils eine vorgegebene Restwandstärke erzeugt. Um eine Restwandstärke hoher Genauigkeit zu erreichen, werden dort mittels Sensoren Referenzmesswerte durch die Vermessung bzw. Testbearbeitung von Referenzwerkstücken gewonnen und den jeweiligen Bearbeitungsorten zugeordnet abgespeichert.

Der Erfindung liegt die Aufgabe zugrunde, ein Verfahren zur Herstellung einer Schwächungslinie in ein flächenhaftes Werkstück mittels Laser zu verbessern, bei dem mit einer Anordnung von Sensoren die transmittierende Laserstrahlung an Abtragsorten entlang der Kontur Schwächungslinie detektiert wird.

Die Aufgabe wird durch ein Verfahren zur Herstellung einer Schwächungslinie durch Materialabtrag an einem flächenhaften Werkstück gelöst. Für eine eindeutige Beschreibung weist das flächenhafte Werkstück eine Ansichtsseite und eine der Ansichtsseite gegenüberliegende Rückseite auf. Diese Begriffswahl ergibt sich aus einer typischen Verwendung eines solchen Werkstückes als Airbagabdeckung. Zur Durchführung des Verfahrens wird durch einen Lasergenerator ein gepulster Laserstrahl mit Laserpulsen mit einer durch eine Pulsamplitude und eine Pulslänge bestimmten Energie erzeugt. Die Laserpulse werden nacheinander, in mehrfach sich wiederholenden Bearbeitungszyklen, entlang einer vorgegebenen Kontur für die Schwächungslinie jeweils auf einen Abtragsort von der Rückseite her eingetragen. Pro Abtragsort erfolgt der Materialabtrag bis auf jeweils eine vorgegebene Restwandstärke, die auch Null sein kann. Dabei wird bei Erreichen eines für die jeweils vorgegebene Restwandstärke korrelierenden Abschaltkriteriums ortsaufgelöst auf die Abtragsorte der Eintrag der Laserpulse beendet. Pro Bearbeitungszyklus wird eine Messsignalkurve generiert, die durch Messsignale über die Abtragsorte gebildet ist, die jeweils durch Detektion eines transmittierenden Pulsamplitudenanteils der Pulsamplitude eines der Laserpulse mittels wenigstens eines Sensors einer Anordnung von Sensoren pro Abtragsort bewirkt werden. Ist an einem der Abtragsorte der transmittierende Pulsamplitudenanteil geringer als ein den Empfindlichkeitsbereich der Sensoren nach unten begrenzender Schwellwert bzw. transmittiert kein Pulsamplitudenanteil, so wird für den betreffenden Abtragsort kein Messsignal generiert.

Es ist erfindungswesentlich, dass den Bearbeitungszyklen ein Verfahrensschritt zum Generieren und Abspeichern einer Referenzsignalkurve zeitlich vorgeordnet ist. Sie wird gebildet durch die von der Pulsamplitude bewirkten Referenzsignale über die Abtragsorte, wobei in diesem Verfahrensschritt kein Werkstück zwischen dem Lasergenerator und der Anordnung von Sensoren vorhanden ist. In dem zeitlich vorgeordneten Verfahrensschritt sowie den Bearbeitungszyklen wird die Pulsamplitude der Laserpulse konstant gehalten. Als ortsaufgelöstes Abschaltkriterium pro Abtragsort wird jeweils das Erreichen eines jeweils vorgegebenen prozentualen Anteils des Referenzsignals oder eines vorgegebenen absoluten Abstandes vom Referenzsignal durch das Messsignal verwendet.

Es ist besonders vorteilhaft, wenn während des ersten der Bearbeitungszyklen die Laserpulse eine kürzere Pulslänge aufweisen als während der nachfolgenden der Bearbeitungszyklen, sodass die Energie der Laserpulse so gering ist, dass kein Materialabtrag erfolgt. Dadurch wird verhindert, dass an Abtragsorten, wo bereits das Abschaltkriterium erreicht ist, das noch vorhandene Restmaterial weiter verringert oder ganz abgetragen wird.

Wird bereits im ersten Bearbeitungszyklus für einige der Abtragsorte ein Messsignal gebildet, das gleich groß wie das Referenzsignal ist, werden keine weiteren Laserpulse in den nachfolgenden Bearbeitungszyklen an diesen Abtragsorten eingetragen.

Wird bereits im ersten Bearbeitungszyklus für einige der Abtragsorte ein Messsignal gebildet, das größer als der jeweils vorgegebene prozentuale Anteil des jeweiligen Referenzsignals oder dessen Abstand zum Referenzsignal kleiner als der vorgegebene Abstand zum Referenzsignal ist, werden keine Laserpulse in den nachfolgenden Bearbeitungszyklen an diesen Abtragsorten eingetragen.

Es ist von Vorteil, wenn in einem der Bearbeitungszyklen für einige der Abtragsorte ein Messsignal gebildet wird, das kleiner als der jeweils vorgegebene prozentuale Anteil des jeweiligen Referenzsignals oder dessen Abstand zum Referenzsignal kleiner als der vorgegebene Abstand zum Referenzsignal ist, und Laserpulse mit kürzerer Pulslänge in den nachfolgenden Bearbeitungszyklen an diesen Abtragsorten eingetragen werden, als sie an den Abtragsorten eingetragen werden, für die in diesem einen Bearbeitungszyklus noch kein Messsignal gebildet wurde.

Vorteilhaft wird der zeitlich vorgeordnete Verfahrensschritt für die Bearbeitung von Werkstücken gleichen Typs mit einer gleichen Kontur für die Schwächungslinie nur einmal durchgeführt und dann für die Herstellung der Schwächungslinie in die weiteren Werkstücke gleichen Typs verwendet.

Die Erfindung wird nachfolgend anhand von Ausführungsbeispielen und zugehörigen Zeichnungen näher erläutert.

Hierzu zeigen:
- Fig. 1: eine Vorrichtung zur Durchführung des Verfahrens,
- Fig. 2: eine Referenzsignalkurve, gebildet aus Referenzsignalen über die Abtragsorte, während kein Werkstück oberhalb der Anordnung von Sensoren angeordnet ist,
- Fig.3: eine erste Messsignalkurve, gebildet aus Messsignalen über die Abtragsorte, während ein unbearbeitetes Werkstück oberhalb der Anordnung von Sensoren angeordnet ist, und
- Fig.4: eine n-te Messsignalkurve, gebildet aus Messsignalen über die Abtragsorte, während das Werkstück im n-ten Bearbeitungszyklus bearbeitet wird.

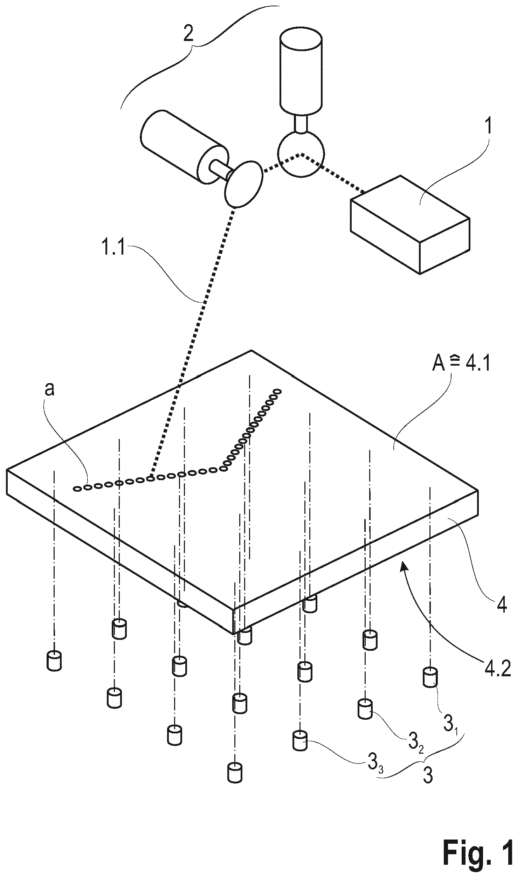

In Fig. 1 ist eine Prinzipskizze für eine zur Durchführung geeignete, aus dem Stand der Technik bekannte Vorrichtung dargestellt.

Sie enthält einen Lasergenerator 1, der Laserpulse 1.1 mit einer Pulsamplitude (gepulster Laserstrahl) abgibt, einen Laserscanner 2, der die Laserpulse 1.1 innerhalb eines Arbeitsfeldes A an Abtragsorte a₁, ..., aₙ führt, und eine Anordnung von Sensoren 3, in der unterhalb des Arbeitsfeldes A Sensoren 3₁, ..., 3ₘ matrixförmig angeordnet sind und jeweils einen so großen Öffnungswinkel aufweisen, dass jeweils wenigstens einer der Sensoren 3₁, ..., 3ₘ die Pulsamplitude bzw. einen Pulsamplitudenanteil eines an einem beliebigen der Abtragsorte a₁, ..., aₙ innerhalb des Arbeitsfeldes A auftreffenden Laserpulses 1.1 detektiert. Durch die konkrete Ausführung und Anordnung der Sensoren 3 kann von jedem Punkt innerhalb des Arbeitsfeldes A und damit an einem beliebigen Abtragsort a₁, ..., aₙ ein transmittierender Pulsamplitudenanteil detektiert werden, sodass diese Vorrichtung, ohne speziell für eine bestimmte Kontur einer Schwächungslinie konfiguriert zu werden, verwendet werden kann. Für die Aufnahme einer erfindungsgemäßen Referenzsignalkurve f(Rₐ) wird die Vorrichtung ohne ein eingelegtes Werkstück 4 betrieben, wobei der Laserscanner 2 so angesteuert wird, dass die Laserpulse 1.1 entlang einer vorgegebenen Kontur einer Schwächungslinie auf Abtragsorte a₁, ..., aₙ auftreffen.

Zur Bearbeitung wird ein flächenhaftes Werkstück 4, das eine Rückseite 4.1 und eine Ansichtsseite 4.2 aufweist, in der Vorrichtung so angeordnet, dass dessen Rückseite 4.1 mit dem Arbeitsfeld A zusammenfällt und dessen Ansichtsseite 4.2 der Anordnung der Sensoren 3 zugewandt ist.

Gleich dem Stand der Technik erfolgt der Materialabtrag bei der Herstellung einer Schwächungslinie in ein flächenhaftes Werkstück 4 grundsätzlich, indem ein Laserstrahl Laserpulse 1.1 auf die Rückseite 4.1 des flächenhaften Werkstücks 4 richtet und mehrfach, das heißt in mehreren Bearbeitungszyklen, entlang einer vorgegebenen Kontur für die Schwächungslinie über das flächenhafte Werkstück 4, vorteilhaft mittels eines Laserscanners 2, geführt wird. Der dabei jeweils auf einen Abtragsort a₁, ..., aₙ auftreffende Laserpuls 1.1 bewirkt einen Energieeintrag, der am jeweiligen Abtragsort a₁, ..., aₙ zu einer Ablation des Materials des flächenhaften Werkstücks 4 führt.

Die mehrfache Wiederholung der Abtastbewegung erfolgt, bis für alle Abtragsorte a₁, ..., aₙ eine jeweils gewünschte Restwandstärke, die auch Null sein kann, erreicht ist. Der die Laserpulse 1.1 generierende Lasergenerator 1 wird so angesteuert, dass auf die Abtragsorte a₁, ..., aₙ jeweils nur solange Laserpulse 1.1 auftreffen, bis die gewünschte Restwandstärke erreicht ist, das heißt es erfolgt während der Abtastbewegung eine ortsaufgelöste Abschaltung des Laserstrahls. Das Abschaltkriterium wird abhängig von einem am jeweiligen Abtragsort a₁, ..., aₙ transmittierenden Pulsamplitudenanteil der Pulsamplitude des Laserpulses 1.1 gebildet. Hierfür ist die Anordnung von Sensoren 3 auf der der Einwirkung des Laserstrahls gegenüberliegenden Ansichtsseite 4.2 des flächenhaften Werkstücks 4 angeordnet. Soweit ist das Verfahren aus dem Stand der Technik bekannt.

Neu an dem erfindungsgemäßen Verfahren ist die Gewinnung des Abschaltkriteriums, was mit der jeweils gewünschten Restwandstärke korreliert. Die erfindungsgemäße Gewinnung des Abschaltkriteriums führt zu einer engeren Toleranz der Restwandstärke ortaufgelöst über die Abtragsorte a₁, ..., aₙ entlang der Kontur und damit zu einem reproduzierbaren Aufreißverhalten der Schwächungslinie.

Indem das Abschaltkriterium aus einem Vergleich zwischen einer ortsaufgelösten Referenzsignalkurve f(Rₐ) und Messsignalkurven f₁(Mₐ), ..., fₙ(Mₐ) gebildet wird, bedarf es keiner an die Kontur der Schwächungslinie angepassten Anordnung der Sensoren 3. Damit eröffnet sich die Möglichkeit, mit einer Vorrichtung, die eine feste Anordnung von Sensoren 3 aufweist, Werkstücke 4 mit unterschiedlichen Konturen oder Werkstücke 4 mit gleichen Konturen, die innerhalb des Arbeitsfeldes A relativ unterschiedlich liegen, herzustellen.

Das Verfahren wird hierzu wie folgt verändert:
Den zuvor beschriebenen Bearbeitungszyklen, bei denen grundsätzlich pro Laserpuls 1.1 an einem der Abtragsorte a₁, ..., aₙ ein Materialabtrag erfolgt, ist ein Verfahrensschritt zeitlich vorgeordnet, in dem eine Referenzsignalkurve f(Rₐ) aus durch die Pulsamplituden bewirkten Referenzsignalen Rₐ, z. B. in Form einer Spannung, über die Abtragsorte a₁, ..., aₙ gebildet und abgespeichert wird. Hierzu wird der Laserstrahl einmal entlang der Kontur der Schwächungslinie geführt und pro Abtragsort a₁, ..., aₙ wird ein Laserpuls 1.1 abgegeben. Es befindet sich jedoch kein Werkstück 4 in dem Arbeitsfeld A oberhalb der Anordnung von Sensoren 3. Die Empfindlichkeit der Sensoren 3₁, ..., 3ₘ ist so eingestellt, z. B. mittels Abschwächern, dass die Pulsamplitude der Laserpulse 1.1 innerhalb des Dynamikbereiches der Sensoren 3₁, ..., 3ₘ liegt. Je nachdem, wo einer der Abtragsorte a₁,..., aₙ relativ zu den Sensoren 3₁, ..., 3ₘ liegt, wird einer der Sensoren 3₁, ..., 3ₘ oder werden mehrere der Sensoren 3₁, ..., 3ₘ die Pulsamplitude bzw. Pulsamplitudenanteile des Laserpulses 1.1 detektieren, woraus ein Referenzsignal Rₐ gebildet wird.

Der Einfachheit halber soll nachfolgend von einem Referenz- bzw. Messsignal Rₐ bzw. Mₐ gesprochen werden, unabhängig davon, ob nur ein einzelner der Sensoren 3₁, ..., 3ₘ die Pulsamplitude bzw. einen Pulsamplitudenanteil detektiert und daraus ein einzelnes Referenz- bzw. Messsignal Rₐ bzw. Mₐ abgeleitet wird, oder ob mehrere der Sensoren 3₁, ..., 3ₘ jeweils einen Pulsamplitudenanteil detektieren und daraus mehrere einzelne Referenz- bzw. Messsignale Rₐ bzw. Mₐ abgeleitet werden, aus denen z. B. durch Addition, Oder-Verknüpfung oder Mittelwertbildung ein Gesamtreferenz- bzw. Gesamtmesssignal gebildet wird.

Die Sensoren 3₁, ..., 3ₘ sind üblicherweise korrelierend zur Kontur der Schwächungslinie angeordnet. In Verbindung mit der Durchführung des erfindungsgemäßen Verfahrens sind sie jedoch vorteilhaft matrixförmig, ein Arbeitsfeld A abdeckend, über das der Laserstrahl grundsätzlich geführt werden kann, angeordnet, sodass mit einer gleichen Konfiguration der Anordnung der Sensoren 3 verschiedene Konturen von Schwächungslinien, die innerhalb des Arbeitsfeldes A liegen, herstellbar sind.

Wird für die Strahlführung des Laserstrahls ein Laserscanner 2 verwendet, ändert sich der Auftreffwinkel des Laserstrahls in Abhängigkeit von der Position des aktuellen Abtragsortes a₁, ..., aₙ im Arbeitsfeld A von 0° im Zentrum bis ca. 20° an den Rändern. Dadurch ergeben sich für jede Kontur einer Schwächelinie im Arbeitsfeld A eine individuelle Bestrahlungsrichtung der Abtragsorte und damit der Sensoren 3₁, ..., 3ₘ und individuelle Abstände der Abtragsorte a₁, ..., aₙ zu den nächstgelegenen Sensormittelpunkten. Abhängig vom jeweiligen Öffnungswinkel der Sensoren 3₁, ..., 3ₘ, zur Signalerfassung, und vom Abstand der Sensoren 3₁, ..., 3ₘ zueinander ergibt sich ein Referenzsignal Rₐ pro Abtragsort a₁, ..., aₙ, welches in Abhängigkeit vom jeweiligen Abstand der Abtragsorte a₁, ..., aₙ zu den Sensoren 3₁, ..., 3ₘ und dem Auftreffwinkel des Laserstrahls unterschiedlich sein kann, da deren Empfindlichkeit mit zunehmendem Abstand zum Sensormittelpunkt abnimmt.

Die Referenzsignale Rₐ werden den einzelnen Abtragsorten a₁, ..., aₙ zugeordnet abgespeichert.

Dieser den Bearbeitungszyklen vorgeordnete Verfahrensschritt muss für die Bearbeitung von Werkstücken 4 unterschiedlicher Konturen für die Schwächungslinie wiederholt werden. Für die Bearbeitung von Werkstücken 4 mit einer gleichen Kontur der Schwächungslinie, die auch eine gleiche Relativlage zu den Sensoren 3₁, ..., 3ₘ der Anordnung von Sensoren 3 aufweist, kann auf die einmal abgespeicherte Referenzsignalkurve f(Rₐ) zurückgegriffen werden.

In den nachfolgenden Bearbeitungszyklen wird jeweils eine Messsignalkurve f₁(Mₐ), ..., fₙ(Mₐ) gebildet und mit der Referenzsignalkurve f(Rₐ) verglichen. Die Messsignale Mₐ werden jeweils durch einen transmittierenden Pulsamplitudenanteil der Pulsamplitude eines Laserpulses 1.1 bewirkt und z. B. in Form einer Spannung den Abtragsorten a₁, ..., aₙ zugeordnet erfasst und abgespeichert.
Die Laserpulse 1.1 haben bei dem vorgeordneten Verfahrensschritt und den Bearbeitungszyklen eine unverändert gleich große Pulsamplitude. Ob ein Materialabtrag erfolgt und wie viel Material gegebenenfalls pro Laserpuls 1.1 an einem der Abtragsorte a₁, ..., aₙ abgetragen wird, wird über die Pulslänge gesteuert. Wenn aufgrund der Eigenschaften des flächenhaften Werkstückes 4 zu erwarten ist, dass bereits in dem ersten Bearbeitungszyklus Messsignale Mₐ gebildet werden, die in ihrer Höhe dem Referenzsignal Rₐ entsprechen oder diesem annähernd entsprechen, wird vorteilhaft für die Laserpulse 1.1 in diesem ersten Bearbeitungszyklus eine kürzere Pulslänge als in den nachfolgenden Bearbeitungszyklen gewählt, um den Energieeintrag soweit zu reduzieren, dass noch kein Materialabtrag erfolgt.

Derartige Werkstücke 4 können Gewebe oder Gewirke sein, die eine durchbrochene Struktur aufweisen, so dass die Laserpulse 1.1 an einigen der Abtragsorte a₁, ..., aₙ das Werkstück 4 bereits ohne einen vorherigen Materialabtrag ungehindert passieren können. Das Verfahren kann grundsätzlich auf alle Werkstücke 4 angewandt werden, unabhängig davon, ob bereits bei einem ersten Bearbeitungszyklus für alle Abtragsorte a₁, ..., aₙ, für einen Teil der Abtragsorte a₁, ..., aₙ oder für keinen der Abtragsorte a₁, ..., aₙ bereits Messsignale Mₐ erfasst werden. Entscheidend ist, dass als Abschaltkriterium für die einzelnen Abtragsorte a₁, ..., aₙ jeweils ein vorgegebener prozentualer Anteil des Referenzsignals Rₐ oder auch ein absoluter Abstand zum Referenzsignal Rₐ verwendet wird und die Bearbeitung an dem betreffenden Abtragsort a₁, ..., aₙ beendet wird, wenn für diesen Abtragsort a₁, ..., aₙ erstmals ein Messsignal Mₐ gebildet wird, das größer / gleich dem vorgegebenen Abschaltkriterium ist. Wie groß der prozentuale Anteil des Referenzsignals Rₐ bzw. der Abstand vom Referenzsignal Rₐ als Abschaltkriterium gewählt wird, hängt von den Materialeigenschaften des Werkstückes 4 ab.

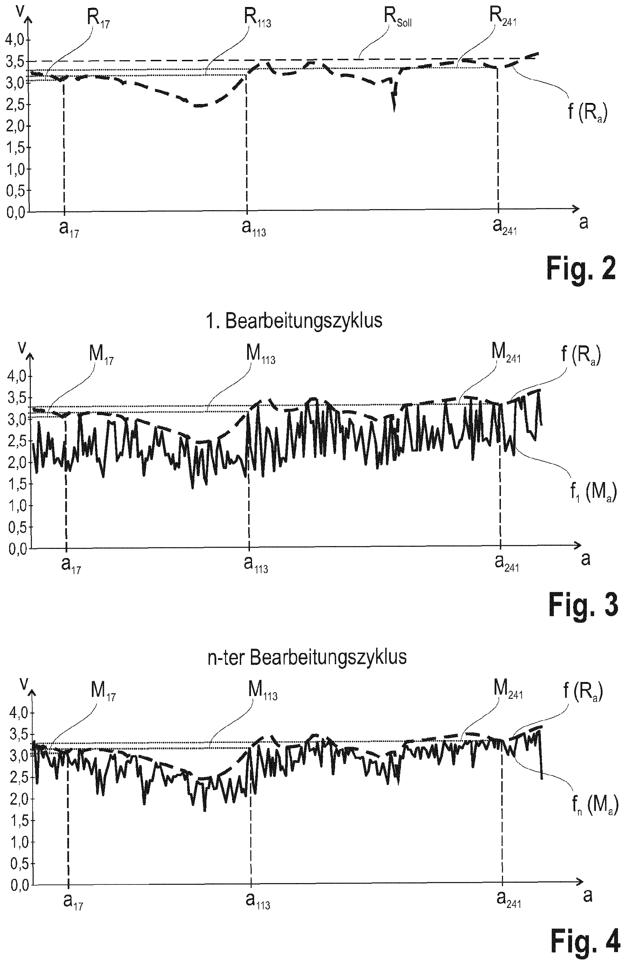

In den Fig. 2 bis 4 sind eine Referenzsignalkurve f(Rₐ) und eine erste und eine n-te Messsignalkurve f₁(Mₐ), fₙ(Mₐ) gezeigt. Bearbeitet wurde hier ein transparentes Werkstück 4, sodass bereits ohne jeglichen Materialabtrag an allen der Abtragsorte a₁, ..., aₙ über die Kontur der einzubringenden Schwächungslinie ein Pulsamplitudenanteil des jeweils auftreffenden Laserpulses 1.1 transmittiert.

Fig. 2 zeigt eine Referenzsignalkurve f(Rₐ), die sich aus den einzelnen jeweils einem der Abtragsorte a₁, ..., aₙ zugeordneten Referenzsignalen Rₐ ergibt. Die Referenzsignale Rₐ weichen mehr oder weniger von einem theoretischen Sollwert Rₛₒₗₗ ab.

Fig. 3 zeigt eine erste Messsignalkurve f₁(Mₐ), die sich aus den einzelnen jeweils einem der Abtragsorte a₁, ..., aₙ zugeordneten Messsignalen Mₐ während des ersten Bearbeitungszyklus ergibt. Die Messsignale Mₐ weichen mehr oder weniger von den jeweiligen Referenzsignalen Rₐ ab bzw. entsprechen an einigen der Abtragsorte a₁, ..., aₙ dem Referenzsignal Rₐ. Im letztgenannten Fall wird in den weiteren Bearbeitungszyklen auf diese der Abtragsorte a₁, ..., aₙ kein weiterer Laserpuls 1.1 eingetragen.

Fig. 4 zeigt eine weitere n-te Messsignalkurve fₙ(Mₐ). Die n-te Messsignalkurve fₙ(Mₐ) hat sich sichtbar an die Referenzsignalkurve f(Rₐ) angenähert.

Beispielhaft wird an drei verschiedenen der Abtragsorte a₁, ..., aₙ von insgesamt beispielhaft 270 Abtragsorten a₁, ..., aₙ (n = 270), die die Kontur der Schwächungslinie beschreiben, nämlich a₁₇, a₁₁₃ und a₂₄₁, die Bearbeitung erläutert.

Am Abtragsort a₁₇ weist das Messsignal M₁₇ während des ersten Bearbeitungszyklus noch einen großen Abstand zum Referenzsignal R₁₇ auf, während es im n-ten Bearbeitungszyklus nur noch einen marginalen Abstand hat und die Bearbeitung dieses Abtragsortes a₁₇ beendet wurde. Ähnlich verhält es sich am Abtragsort a₁₁₃, wobei hier die Bearbeitung zeitiger eingestellt wurde. Am Abtragsort a₂₄₁ wurde bereits im ersten Bearbeitungszyklus ein Messsignal M₂₄₁ generiert, welches dem Referenzsignal R₂₄₁ entspricht, oder das Abschaltkriterium erfüllt, sodass hier vorteilhaft kein Abtrag erfolgt, was machbar ist, indem im ersten Bearbeitungszyklus mit einer so kurzen Pulslänge gearbeitet wird, dass der Energieeintrag durch einen Laserpuls 1.1 unterhalb einer Schwelle liegt, die einen Materialabtrag bewirkt.

Ein transparentes flächenhaftes Werkstück 4 kann z. B. Gewebe sein, wo die Abtragsorte a₁, ..., aₙ vereinfacht entweder auf einem Gewebefaden, einer Kreuzung von Gewebefäden oder einem von Gewebefäden begrenzten Loch liegen, womit es drei Gruppen von Abtragsorten a₁, ..., aₙ gibt, durch die hindurch ein unterschiedlich großer Pulsamplitudenanteil transmittiert. Es kann sich bei derartigen Werkstücken 4 auch um Gewirke handeln, bei denen sich analog zu einem Gewebe Abtragsorte a₁, ..., aₙ unterschiedlicher Transparenz ergeben.

### Bezugszeichenliste

- 1: Lasergenerator
- 1.1: Laserpuls
- 2: Laserscanner
- 3: Anordnung von Sensoren 3₁, ..., 3ₘ
- 3₁, ..., 3ₘ: Sensor (der Anordnung von Sensoren 3₁, ..., 3ₘ)
- 4: Werkstück
- 4.1: Rückseite
- 4.2: Ansichtsseite

- A: Arbeitsfeld
- a₁, ..., aₙ: Abtragsort
- f(Rₐ): Referenzsignalkurve
- f₁(Mₐ): erste Messsignalkurve
- fₙ(Mₐ): n-te Messsignalkurve
- Mₐ: Messsignal
- Rₐ: Referenzsignal
- Rₛₒₗₗ: Sollwert

## Patentansprüche

1. Verfahren zur Herstellung einer Schwächungslinie durch Materialabtrag an einem flächenhaften Werkstück (4), aufweisend eine Ansichtsseite (4.2) und eine der Ansichtsseite (4.2) gegenüberliegende Rückseite (4.1), bei dem ein Lasergenerator (1) einen gepulsten Laserstrahl mit Laserpulsen (1.1) mit einer durch eine Pulsamplitude und eine Pulslänge bestimmten Energie erzeugt, die nacheinander, in mehrfach sich wiederholenden Bearbeitungszyklen, entlang einer vorgegebenen Kontur für die Schwächungslinie jeweils auf einen Abtragsort (a₁, ..., aₙ) von der Rückseite (4.1) her eingetragen werden und wobei pro Abtragsort (a₁, ..., aₙ) der Materialabtrag bis auf jeweils eine vorgegebene Restwandstärke, die auch Null sein kann, erfolgt, wobei bei Erreichen eines für die jeweils vorgegebene Restwandstärke korrelierenden Abschaltkriteriums ortsaufgelöst auf die Abtragsorte (a₁, ..., aₙ) der Eintrag der Laserpulse (1.1) beendet wird und pro Bearbeitungszyklus eine Messsignalkurve generiert wird, die durch Messsignale (Mₐ) über die Abtragsorte (a₁, ..., aₙ) gebildet ist, die jeweils durch Detektion eines transmittierenden Pulsamplitudenanteils der Pulsamplitude eines der Laserpulse (1.1) mittels wenigstens eines Sensors (3₁, ..., 3ₘ) einer Anordnung von Sensoren (3) pro Abtragsort (a₁, ..., aₙ) bewirkt werden, **dadurch gekennzeichnet, dass** den Bearbeitungszyklen ein Verfahrensschritt zum Generieren und Abspeichern einer Referenzsignalkurve (f(Rₐ)) zeitlich vorgeordnet ist, welche durch die von der Pulsamplitude bewirkten Referenzsignale (Rₐ) über die Abtragsorte (a₁, ..., aₙ) gebildet ist, wobei in diesem Verfahrensschritt kein flächenhaftes Werkstück (4) zwischen dem Lasergenerator (1) und der Anordnung von Sensoren (3) angeordnet ist, in dem zeitlich vorgeordneten Verfahrensschritt sowie den Bearbeitungszyklen die Pulsamplitude der Laserpulse (1.1) konstant gehalten wird und als ortsaufgelöstes Abschaltkriterium pro Abtragsort (a₁, ..., aₙ) jeweils das Erreichen eines jeweils vorgegebenen prozentualen Anteils des Referenzsignals (Rₐ) oder eines vorgegebenen Abstandes vom Referenzsignal (Rₐ) durch das Messsignal (Mₐ) verwendet wird.

2. Verfahren nach Anspruch 1, **dadurch gekennzeichnet, dass** während eines ersten der Bearbeitungszyklen die Laserpulse (1.1) eine kürzere Pulslänge aufweisen als während nachfolgender der Bearbeitungszyklen, sodass die Energie der Laserpulse (1.1) so gering ist, dass kein Materialabtrag erfolgt.

3. Verfahren nach Anspruch 2, **dadurch gekennzeichnet, dass** bereits im ersten Bearbeitungszyklus für einige der Abtragsorte (a₁, ..., aₙ) ein Messsignal (Mₐ) gebildet wird, das gleich groß wie das Referenzsignal (Rₐ) ist, und keine weiteren Laserpulse (1.1) in den nachfolgenden Bearbeitungszyklen an diesen Abtragsorten (a) eingetragen werden.

4. Verfahren nach Anspruch 2 oder 3, **dadurch gekennzeichnet, dass** bereits im ersten Bearbeitungszyklus für einige der Abtragsorte (a₁, ..., aₙ) ein Messsignal (Mₐ) gebildet wird, das größer als der jeweils vorgegebene prozentuale Anteil des jeweiligen Referenzsignals (Rₐ) oder dessen Abstand zum Referenzsignal (Rₐ) kleiner als der vorgegebene Abstand zum Referenzsignal (Rₐ) ist, und keine Laserpulse (1.1) in den nachfolgenden Bearbeitungszyklen an diesen der Abtragsorte (a₁, ..., aₙ) eingetragen werden.

5. Verfahren nach Anspruch 2 oder 3, **dadurch gekennzeichnet, dass** in einem der Bearbeitungszyklen für einige der Abtragsorte (a₁, ..., aₙ) ein Messsignal (Mₐ) gebildet wird, das kleiner als der jeweils vorgegebene prozentuale Anteil des jeweiligen Referenzsignals (Rₐ) oder dessen Abstand zum Referenzsignal (Rₐ) kleiner als der vorgegebene Abstand zum Referenzsignal (Rₐ) ist, und Laserpulse (1.1) mit kürzerer Pulslänge in den nachfolgenden Bearbeitungszyklen an diesen der Abtragsorte (a₁, ..., aₙ) eingetragen werden, als sie an den der Abtragsorte (a₁, ..., aₙ) eingetragen werden, für die in diesem einen Bearbeitungszyklus noch kein Messsignal (Mₐ) gebildet wurde.

6. Verfahren nach Anspruch 1, **dadurch gekennzeichnet, dass** der zeitlich vorgeordnete Verfahrensschritt für die Bearbeitung von Werkstücken (4) gleichen Typs mit einer gleichen Kontur für die Schwächungslinie nur einmal durchgeführt wird und dann für die Herstellung der Schwächungslinie in die weiteren Werkstücke (4) gleichen Typs verwendet wird.

## Claims

1. A method for producing a tear line by material removal on a planar workpiece (4), which has a visible side (4.2) and a reverse side (4.1) opposite said visible side (4.2), wherein a laser generator (1) generates a pulsed laser beam with laser pulses (1.1) of an energy determined by a pulse amplitude and a pulse length, which are introduced sequentially, in machining cycles repeated several times, along a predetermined contour for the tear line at a respective removal location (a₁, ..., aₙ) from the reverse side (4.1) and wherein material removal is performed for each removal location (a₁, ..., aₙ) to a respective predetermined residual wall thickness, which may even be zero, wherein upon reaching a deactivation criterion correlating with the respective predetermined residual wall thickness, the introduction of the laser pulses (1.1) is terminated in a space-resolved manner with respect to the removal locations (a₁, ..., aₙ) and for each machining cycle a measurement signal curve is generated, which is formed by measurement signals (Mₐ) via the removal locations (a₁, ..., aₙ), which are each caused by detection of a transmitting part of the pulse amplitude of one of the laser pulses (1.1) by means of at least one sensor (3₁, ..., 3ₘ) of an arrangement of sensors (3) for each removal location (a₁, ..., aₙ), **characterised in that**
the machining cycles are temporally preceded by a method step for generating and storing a reference signal curve (f(Rₐ)), which is formed by the reference signals (Rₐ) caused by the pulse amplitude via the removal locations (a₁, ..., aₙ), with no planar workpiece (4) being arranged, in this method step, between the laser generator (1) and the arrangement of sensors (3), the pulse amplitude of the laser pulses (1.1) being kept constant in the temporally preceding method step as well as the machining cycles, and the achievement of a respective predetermined percentage of the reference signal (Rₐ) or of a predetermined distance from the reference signal (Rₐ) by the measurement signal (Mₐ) being used as the space-resolved deactivation criterion for each removal location (a₁, ..., aₙ).

2. The method according to claim 1, **characterised in that** the laser pulses (1.1) have a shorter pulse length during a first one of the machining cycles than during subsequent ones of the machining cycles, so that the energy of the laser pulses (1.1) is so low that no material removal results.

3. The method according to claim 2, **characterised in that** a measurement signal (Mₐ) equal to the reference signal (Rₐ) is already generated for some of the removal locations (a₁, ..., aₙ) in the first machining cycle, and no further laser pulses (1.1) are introduced at these removal locations (a) in the subsequent machining cycles.

4. The method according to claim 2 or 3, **characterised in that** a measurement signal (Mₐ) which is greater than the respective predetermined percentage of the respective reference signal (Rₐ) or whose distance from the reference signal (Rₐ) is smaller than the predetermined distance from the reference signal (Rₐ) is already generated for some of the removal locations (a₁, ..., aₙ) in the first machining cycle, and no laser pulses (1.1) are introduced at these ones of the removal locations (a₁, ..., aₙ) in the subsequent machining cycles.

5. The method according to claim 2 or 3, **characterised in that** a measurement signal (Mₐ) which is smaller than the respective predetermined percentage of the respective reference signal (Rₐ) or whose distance from the reference signal (Rₐ) is smaller than the predetermined distance from the reference signal (Rₐ) is generated for some of the removal locations (a₁, ..., aₙ) in one of the machining cycles, and in the subsequent machining cycles laser pulses (1.1) are introduced at these ones of the removal locations (a₁, ..., aₙ) with a shorter pulse length than those introduced at the removal locations (a₁, ..., aₙ) for which no measurement signal (Mₐ) has been formed yet in this one machining cycle.

6. The method according to claim 1, **characterised in that** the temporally preceding method step is carried out only once for machining workpieces (4) of the same type with the same contour for the tear line and is then used for producing the tear line in the further workpieces (4) of the same type.

## Revendications

1. Procédé de fabrication d'une ligne d'affaiblissement par enlèvement de matériau sur une pièce (4) plane, ayant un côté visible (4.2) et un côté arrière (4.1) en face du côté visible (4.2), dans lequel un générateur laser (1) génère un faisceau laser pulsé avec des impulsions laser (1.1) d'une énergie déterminée par une amplitude d'impulsion et une longueur d'impulsion, qui sont introduites successivement, dans des cycles d'usinage répétés plusieurs fois, le long d'un contour prédéterminé pour la ligne d'affaiblissement sur un lieu d'enlèvement (a₁, ..., aₙ) respectif à partir du côté arrière (4.1) et dans lequel l'enlèvement de matériau est effectué pour chaque lieu d'enlèvement (a₁, ..., aₙ) à une épaisseur de paroi résiduelle prédéterminée respective, qui peut également être égale à zéro, lors de l'obtention d'un critère d'arrêt corrélant avec l'épaisseur de paroi résiduelle prédéterminée respective, l'introduction des impulsions laser (1.1) étant terminée à résolution spatiale par rapport aux lieux d'enlèvement (a₁, ..., aₙ) et une courbe de signal de mesure étant générée pour chaque cycle d'usinage, qui est formée par des signaux de mesure (Mₐ) via les lieux d'enlèvement (a₁, ..., aₙ), chacun étant causé par détection d'une partie transmissive de l'amplitude d'impulsion d'une des impulsions laser (1.1) au moyen d'au moins un capteur (3₁, ..., 3ₘ) d'un arrangement de capteurs (3) pour chaque lieu d'enlèvement (a₁, ..., aₙ), **caractérisé en ce que**
les cycles d'usinage sont précédés temporellement par une étape de procédé pour générer et stocker une courbe de signal de référence (f(Rₐ)), qui est formée par les signaux de référence (Rₐ) causés par l'amplitude d'impulsion via les lieux d'enlèvement (a₁, ..., aₙ), aucune pièce (4) plane se trouvant entre le générateur laser (1) et l'arrangement de capteurs (3) dans cet étape de procédé, l'amplitude d'impulsion des impulsions laser (1.1) étant maintenue constante dans l'étape de procédé temporellement précédente et dans les cycles d'usinage, et l'obtention d'un pourcentage prédéterminé respectif du signal de référence (Rₐ) ou d'une distance prédéterminée du signal de référence (Rₐ) par le signal de mesure (Mₐ) étant utilisée comme critère d'arrêt à résolution spatiale pour chaque lieu d'enlèvement (a₁, ..., aₙ).

2. Procédé selon la revendication 1, **caractérisé en ce que** les impulsions laser (1.1) ont une longueur d'impulsion plus courte pendant un premier des cycles d'usinage que pendant des cycles d'usinage suivants, de sorte que l'énergie des impulsions laser (1.1) est si faible qu'aucun enlèvement de matériau ne se produit.

3. Procédé selon la revendication 2, **caractérisé en ce qu'**un signal de mesure (Mₐ) égal au signal de référence (Rₐ) est déjà généré pour certains des lieux d'enlèvement (a₁, ..., aₙ) dans le premier cycle d'usinage, et aucunes autres impulsions laser (1.1) ne sont introduites à ces lieux d'enlèvement (a) dans les cycles d'usinage suivants.

4. Procédé selon la revendication 2 ou 3, **caractérisé en ce qu'**un signal de mesure (Mₐ), qui est supérieur au pourcentage prédéterminé respectif du signal de référence (Rₐ) respectif ou dont la distance du signal de référence (Rₐ) est inférieure à la distance prédéterminée du signal de référence (Rₐ), est déjà généré pour certains des lieux d'enlèvement (a₁, ..., aₙ) dans le premier cycle d'usinage, et aucunes impulsions laser (1.1) ne sont introduites à ces lieux d'enlèvement (a₁, ..., aₙ) dans les cycles d'usinage suivants.

5. Procédé selon la revendication 2 ou 3, **caractérisé en ce qu'**un signal de mesure (Mₐ), qui est inférieur au pourcentage prédéterminé respectif du signal de référence (Rₐ) respectif ou dont la distance du signal de référence (Rₐ) est inférieure à la distance prédéterminée du signal de référence (Rₐ), est généré pour certains des lieux d'enlèvement (a₁, ..., aₙ) dans un des cycles d'usinage, et dans les cycles d'usinage suivants des impulsions laser (1.1) sont introduites à ces lieux d'enlèvement (a₁, ..., aₙ) avec une longueur d'impulsion plus courte que celles introduites aux lieux d'enlèvement (a₁, ..., aₙ) pour lesquels aucun signal de mesure (Mₐ) n'a encore été généré dans cet un cycle d'usinage.

6. Procédé selon la revendication 1, **caractérisé en ce que** l'étape de procédé temporellement précédente est effectuée une seule fois pour usiner des pièces (4) du même type avec le même contour pour la ligne d'affaiblissement, et puis est utilisée pour la production de la ligne d'affaiblissement dans les autres pièces (4) du même type.
